# EUROPÄISCHE PATENTSCHRIFT

(11) **EP 0 628 160 B1**
(45) Veröffentlichungstag und Bekanntmachung des Hinweises auf die Patenterteilung: **23.04.1997**
(21) Anmeldenummer: 93903829.5
(22) Anmeldetag: 22.02.1993
(51) Int. Cl.: G01L 9/00, G01L 13/02, G01L 9/12

(54) **VERFAHREN ZUR BATCH-HERSTELLUNG VON DRUCKDIFFERENZ-SENSOREN**
PROCEDURE FOR BATCH PRODUCTION OF PRESSURE DIFFERENCE SENSORS
PROCEDURE DE LA PRODUCTION EN GROUPE DES DETECTEURS DE LA DIFFERENCE DE PRESSION

(30) Priorität: 28.02.1992 DE 4206675
(43) Veröffentlichungstag der Anmeldung: 14.12.1994
(73) Patentinhaber: SIEMENS AKTIENGESELLSCHAFT, 80333 München (DE)
(72) Erfinder: ARNDT, Frank, D-10627 Berlin (DE); HOUDEAU, Detlef, D-12161 Berlin (DE); VON RAUCH, Moritz, D-14055 Berlin (DE); SCHLAAK, Helmut, D-14195 Berlin (DE)
(86) Internationale Anmeldenummer: DE9300166
(87) Internationale Veröffentlichungsnummer: WO9317313

(56) Entgegenhaltungen:
- EP-A- 0 007 596
- DE-A- 3 236 720
- US-A- 4 996 627

## Beschreibung

Die Erfindung bezieht sich auf ein Verfahren zum Herstellen von Druckdifferenz-Sensoren mit jeweils einer Halbleiter-Meßmembran, die zwischen zwei Tragteilen unter Bildung jeweils einer Innenkammer eingespannt ist, wobei die Tragteile innen jeweils eine flächenhafte Elektrode tragen und die eine Innenkammer über eine Durchgangsöffnung in dem einen Tragteil mit einem Druck und die andere Innenkammer mit einem weiteren Druck der zu messenden Druckdifferenz beaufschlagbar ist und wobei die Halbleiter-Meßmembran und die flächenhaften Elektroden mit äußeren Anschlüssen verbunden sind, bei dem
- zum Herstellen von Druckdifferenz-Sensoren mit dem einseitig angeordneten äußeren Anschlüssen ein Wafer mit mehreren mit jeweils einer flächenhaften Elektrode mit jeweils einem äußeren Anschluß versehenen Tragteilen durch Bonden mit einem weiteren Wafer mit mehreren Halbleiter-Meßmembranen verbunden wird und bei dem
- ein zusätzlicher Wafer mit mehreren mit jeweils einer flächenhaften Elektrode mit Leiterbahn versehenen weiteren Tragteilen durch Bonden mit dem weiteren Wafer verbunden wird.

Ein solches Verfahren ist aus der US-Patentschrift US 4,996,627 Al bekannt. Bei diesem bekannten Verfahren werden nicht nur die Halbleiter-Meßmembranen, sondern auch die Tragteile für mehrere Druckdifferenz-Sensoren gleichzeitig parallel hergestellt, indem die Membranen und die Tragteile jeweils in Form von Wafern erzeugt werden. In dem Bestreben, alle elektrischen Anschlüsse eines Druckdifferenz-Sensors auf einer Seite anzuordnen, sind zur Druckzuführung in den Tragteilen vorgesehene Durchgangslöcher durchkontaktiert, wodurch jeweils eine elektrische Verbindung von der jeweils innen an jedem Tragteil angebrachten, flächenhaften Elektrode nach außen geschaffen ist. Bei dem einen Tragteil ist von der Durchkontaktierung aus eine Leiterbahn bis zu einer Ecke des Tragteils gezogen und dort um die Stirnfläche bis zu einer kleinen Kontakfläche auf der anderen Seite dieses Tragteils geführt. Um diese Kontaktfläche zugänglich zu erhalten, ist die Halbleiter-Meßmembran an dieser Stelle mit einer Ausnehmung versehen. Auch das andere (obere) Tragteil ist an einander gegenüberliegenden Ecken mit Ausnehmungen ausgestattet, um elektrische Anschlußflächen zu gewinnen. Das andere Tragteil weist außerdem eine Leiterbahn auf, mit der seine Durchkontaktierung zu einem elektrischen Anschluß in einer Ecke geführt ist.

Der Erfindung liegt die Aufgabe zugrunde, ein Verfahren zum Herstellen eines Druckdifferenz-Sensors mit einer zwischen zwei Tragteilen mit flächenhaften Elektroden eingespannten Halbleiter-Meßmembran vorzuschlagen, mit dem sich die äußeren Anschlüsse für die Halbleiter-Meßmembran und die beiden flächenhaften Elektroden in vergleichsweise einfacher Weise auf einer Seite des Druckdifferenz-Sensors schaffen lassen.

Zur Lösung dieser Aufgabe wird bei dem eingangs angegebenen Verfahren erfindungsgemäß zum Herstellen von Druckdifferenz-Sensoren mit äußeren Anschlüssen auf einer freien Oberfläche eines Tragteils der eine Wafer auf seinen Tragteilen auch mit weiteren äußeren Anschlüssen für jeweils die Halbleiter-Meßmembran und jeweils die weitere flächenhafte Elektrode versehen und der weitere Wafer jeweils an einer Seite der Halbleiter-Meßmembran mit einem rechteckförmigen Durchgangsloch versehen; durch von dem rechteckförmigen Durchgangsloch und im spitzen Winkel zu seiner Längserstreckung verlaufende Teilschnitte durch den weiteren Wafer wird jeweils ein im Zuge des rechteckförmigen Durchgangsloches liegender Steg des weiteren Wafers von den Halbleiter-Meßmembranen isoliert, und durch das Bonden des zusätzlichen Wafers wird eine elektrische Verbindung von jeweils der flächenhaften Elektrode über die Leiterbahn und den Steg zum äußeren Anschluß der flächenhaften Elektrode hergestellt; mittels Trennschnitten durch die rechteckförmigen Durchgangslöcher in deren Längserstreckung und senkrecht dazu werden die Druckdifferenz-Sensoren gebildet.

Der wesentliche Vorteil dieses Verfahrens besteht darin, daß die äußeren Anschlüsse für die Halbleiter-Meßmembran und die beiden flächenhaften Elektroden in herstellungsmäßig einfacher Weise auf einer Seite des Sensors bzw. auf einer freien Oberfläche eines Tragteils geschaffen werden können.

Zur Erläuterung der Erfindung ist in
- Figur 1: ein Schnitt durch ein Ausführungsbeispiel des erfindungsgemäßen Druckdifferenz-Sensors gemäß der Linie I-I in Figur 2, in
- Figur 2: ein Schnitt entlang der Linie II-II in der Darstellung nach Figur 1, in
- Figur 3: eine Draufsicht auf einen bei der Herstellung des erfindungsgemäßen Druckdifferenz-Sensors benutzten Wafer-Aufbau und in
- Figur 4: ein Schnitt durch den Wafer-Aufbau nach Figur 3 entlang der Linie IV-IV dargestellt.

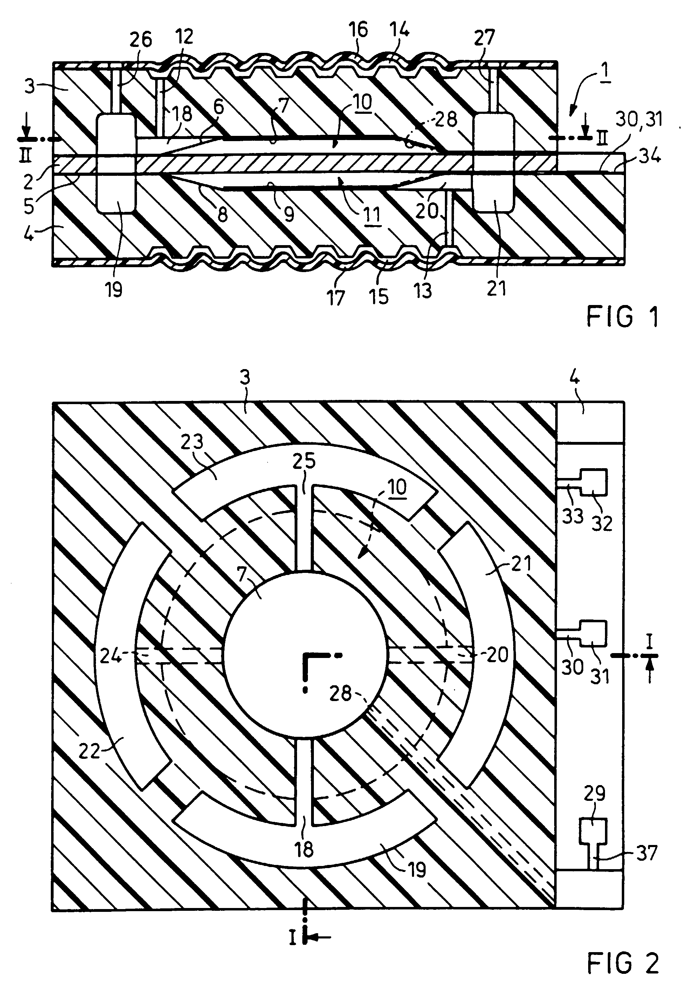

Der in Figur 1 dargestellte Druckdifferenz-Sensor 1 weist eine Halbleiter-Meßmembran 2 auf, die vorzugsweise aus Silizium mit einer derartigen Dotierung hergestellt ist, daß sie hinreichend leitfähig ist. Die Halbleiter-Meßmembran 2 ist zwischen einem in der Figur 1 oberen Tragteil 3 und einem weiteren - in der Figur 1 unteren - Tragteil 4 eingespannt. Sowohl das eine Tragteil 3 als auch das weitere Tragteil 4 bestehen vorzugsweise aus Halbleitermaterial wie Silizium.

Die Halbleiter-Meßmembran 2 ist mit den beiden Tragteilen 3 und 4 in ihrem Bereich 5 durch Bonden fest eingespannt, wobei zwischen der Halbleiter-Meßmembran 2 und den Tragteilen 3 und 4 jeweils bondfähige (in der Figur nicht dargestellte) Glasschichten zur Isolierung vorhanden sind. Es können aber die Tragteile 3 und 4 auch aus Glas oder Keramik bestehen. Das eine Tragteil 3 ist durch Ätzen mit einer Ausnehmung 6 versehen, die in ihrem Grunde eine flächenhafte Elektrode 7 trägt. In entsprechender Weise ist das weitere Tragteil 4 durch Ätzen mit einer Ausnehmung 8 versehen, die eine weitere flächenhafte Elektrode 9 aufweist. Die Ausnehmungen 6 bzw. 8 bilden zusammen mit der Halbleiter-Meßmembran 2 jeweils eine Innenkammer 10 und 11, die über jeweils eine Bohrung 12 bzw. 13 in den Tragteilen 3 bzw. 4 mit jeweils einer Vorkammer 14 bzw. 15 unter Trennmembranen 16 und 17 verbunden sind. Darüber hinaus ist die eine Innenkammer 10 über einen seitlichen Kanal 18 mit einer Ausgleichskammer 19 (vergleiche Figur 2) verbunden. Entsprechend ist die weitere Innenkammer 11 über einen weiteren seitlichen Kanal 20 mit einer weiteren Ausgleichskammer 21 verbunden.

Wie Figur 2 ferner erkennen läßt, sind noch zusätzliche Ausgleichskammern 22 und 23 vorhanden, die ebenfalls über seitliche Kanäle 24 und 25 mit den Innenkammern 10 bzw. 11 in Verbindung stehen.

Der Innenraum des in den Figuren 1 und 2 dargestellten Druckdifferenz-Sensors zwischen den Trennmembranen 16 und 17 wird über Einfüllöffnungen 26 und 27 mit einer inkompressiblen Flüssigkeit gefüllt, und zwar - wie insbesondere Figur 1 zeigt - über die Ausgleichskammern 19 und 21. Nach der Befüllung mit der inkompressiblen Flüssigkeit werden die Einfüllöffnungen 26 und 27 in nicht dargestellter Weise dauerhaft verschlossen.

Die flächenhafte Elektrode 7 ist über eine Leiterbahn 28 (in Figur 2 nur teilweise dargestellt) zu einem äußeren Anschluß 29 geführt, während die flächenhafte Elektrode 9 über eine entsprechende Leiterbahn 30 mit einem äußeren Anschluß 31 verbunden ist. Ein äußerer Anschluß 32 mit einer Leiterbahn 33 für die Halbleiter-Meßmembran 2 ist ebenso - wie die anderen äußeren Anschlüsse 29 und 31-auf der freien Oberfläche 34 des weiteren Tragteils 4 angeordnet. Die elektrischen Leiterbahnen 28 und 30 sind entweder in Kanälen der Tragteile 3 und 4 isoliert nach außen geführt, oder als auf der Oberfläche der Tragteile 3 und 4 liegende Bahnen mit Isolierüberzug.

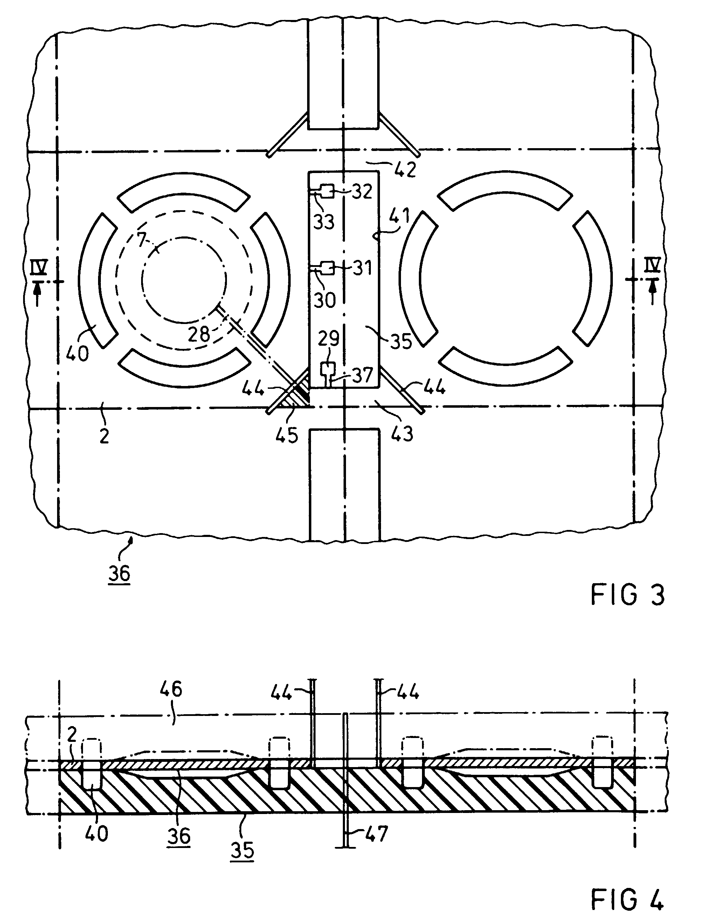

Die Figuren 3 und 4 dienen zur Erläuterung des erfindungsgemäßen Herstellverfahrens. In Figur 3 ist ein Stadium des Herstellverfahrens wiedergegeben, in dem bereits auf einen Wafer 35 (vgl. auch Fig. 4) mit mehreren Tragteilen 4 gemäß Figur 1 ein weiterer Wafer 36 mit Halbleiter-Meßmembranen 2 gemäß Figur 1 durch anodisches Bonden aufgebracht ist; der Wafer 35 ist vorher mit den äußeren Anschlüssen 29, 31 und 32 sowie mit den Leiterbahnen 30 und 33 und einer Anschlußbahn 37 versehen worden, wobei die Leiterbahn 30 unmittelbar zu der flächenhaften Elektrode 9 und die Leiterbahn 33 zur Halbleiter-Meßmembran 2 führt. Die Anschlußbahn 37 ist mit dem Steg 45 beim Bonden elektrisch verbunden. Der weitere Wafer 36 hat vor dem Verbinden mit dem Wafer 35 durch Ätzen nicht nur Durchgangslöcher 40 für die Ausgleichskammern 19, 21, 22 und 23 erhalten, sondern ist auch mit einem rechteckförmigen Durchgangsloch 41 versehen worden, um diesen Wafer als einheitliche Scheibe zu erhalten, indem Verbindungstege 42 und 43 jeweils stehen bleiben. Die strichpunktierten Linien in Figur 3 sollen die äußeren Umrisse der einzelnen Druckdifferenz-Sensoren nach Abschluß des Herstellverfahrens angeben. Zunächst ist in dem dargestellten Verfahrensstadium aber nur ein Wafer-Verbund aus den Wafer 35 und 36 vorhanden. In diesen Verbund werden Teilschnitte 44 eingebracht, die im spitzen Winkel zur Längserstreckung des rechteckförmigen Durchgangsloches 41 verlaufen; die Teilschnitte sind so tief geführt, daß sie den weiteren Wafer 36 völlig durchtrennen. Dies bedeutet, daß nicht nur jeweils die Stege 43 des weiteren Wafers 36 von den übrigen Teilen dieses Wafers abgetrennt werden, sondern auch der in der Figur 3 schraffierte Bereich 45.

Anschließend wird in einem weiteren Herstellschritt durch Bonden mit dem insoweit hergestellten Wafer-Verbund ein zusätzlicher Wafer 46 - in Fig. 4 strichpunktiert dargestellt - verbunden, der mehrere Tragteile 3 gemäß Figur 1 aufweist. Dadurch werden Anschlußbahnen 37 zu den Leiterbahnen 28 der auf diesem zusätzlichen Wafer 46 angebrachten Tragteile 3 jeweils über die Stege 43 und die Bereiche 45 geführt. Anschließend erfolgen Trennschnitte 47, wie dies die Figur 4 zeigt, so daß einzelne Druckdifferenz-Sensoren gebildet sind.

## Patentansprüche

1. Verfahren zum Herstellen von Druckdifferenz-Sensoren mit jeweils einer Halbleiter-Meßmembran (2), die zwischen zwei Tragteilen (3,4) unter Bildung jeweils einer Innenkammer (10,11) eingespannt ist, wobei die Tragteile innen jeweils eine flächenhafte Elektrode (7, 9) tragen und die eine Innenkammer über eine Durchgangsöffnung (12) in dem einen Tragteil mit einem Druck und die andere Innenkammer mit einem weiteren Druck der zu messenden Druckdifferenz beaufschlagbar ist und wobei die Halbleiter-Meßmembran und die flächenhaften Elektroden mit äußeren Anschlüssen (29,31,32) verbunden sind, bei dem
- zum Herstellen von Druckdifferenz-Sensoren mit dem einseitig angeordneten äußeren Anschlussen (29,31,32) ein Wafer (35) mit mehreren mit jeweils einer flächenhaften Elektrode (9) mit jeweils einem äußeren Anschluß (32) versehenen Tragteilen (4) durch Bonden mit einem weiteren Wafer (36) mit mehreren Halbleiter-Meßmembranen (2) verbunden wird und bei dem
- ein zusätzlicher Wafer (46) mit mehreren mit jeweils einer flächenhaften Elektrode (7) mit Leiterbahn (28) versehenen weiteren Tragteilen (3) durch Bonden mit dem weiteren Wafer (36) verbunden wird
**dadurch gekennzeichnet**, daß
- zum Herstellen von Druckdifferenz-Sensoren mit äußeren Anschlüssen (29,31,32) auf einer freien Oberfläche (34) eines Tragteils (4) der eine Wafer (35) auf seinen Tragteilen (4) auch mit weiteren äußeren Anschlüssen (29,30) für jeweils die Halbleiter-Meßmembran (2) und jeweils die weitere flächenhafte Elektrode (7) versehen wird,
- der weitere Wafer (36) jeweils an einer Seite der Halbleiter-Meßmembran (2) mit einem rechteckförmigen Durchgangsloch (41) versehen wird,
- durch von dem rechteckförmigen Durchgangsloch (41) und im spitzen Winkel zu seiner Längserstreckung verlaufende Teilschnitte (44) durch den weiteren Wafer (36) jeweils ein im Zuge des rechteckförmigen Durchgangsloches (44) liegender Steg (43) des weiteren Wafers (36) von den Halbleiter-Meßmembranen (2) isoliert wird,
- durch das Bonden des zusätzlichen Wafers (46) eine elektrische Verbindung von jeweils der flächenhaften Elektrode (7) über die Leiterbahn (28) und den Steg (43) zum äußeren Anschluß (29) der flächenhaften Elektrode (7) hergestellt wird, und
- mittels Trennschnitten (47) durch die rechteckförmigen Durchgangslöcher (41) in deren Längserstreckung und senkrecht dazu die Druckdifferenz-Sensoren (1) gebildet werden.

## Claims

1. Method for the production of pressure-difference sensors having a respective semiconductor measuring diaphragm (2) which is clamped between two bearing portions (3, 4) whilst forming a respective inner chamber (10, 11), in which case the bearing portions bear a respective planar electrode (7, 9) on the inside and it is possible to apply one pressure to the one inner chamber by way of a through-opening (12) in the one bearing portion and to apply a further pressure of the pressure difference to be measured to the other inner chamber, and the semiconductor measuring diaphragm and the planar electrodes are connected to outer terminals (29, 31, 32), wherein
- in order to produce pressure-difference sensors having the outer terminals (29, 31, 32) arranged on the one side, a wafer (35) having a plurality of bearing portions (4), which are respectively provided with a planar electrode (9) that has a respective outer terminal (32), is connected, by means of bonding, to a further wafer (36) having a plurality of semiconductor measuring diaphragms (2), and wherein
- an additional wafer (46) having a plurality of further bearing portions (3), which are respectively provided with a planar electrode (7) that has a printed conductor (28), is connected, by means of bonding, to the further wafer (36),
characterised in that
- in order to produce pressure-difference sensors having outer terminals (29, 31, 32) on a free surface (34) of a bearing portion (4), the one wafer (35), on its bearing portions (4), is also provided with further outer terminals (29, 30) for, in each case, the semiconductor measuring diaphragm (2) and, in each case, the further planar electrode (7),
- the further wafer (36) is provided with a rectangular through-hole (41) in each case on one side of the semiconductor measuring diaphragm (2),
- by means of partial cuts (44) extending through the further wafer (36) from the rectangular through-hole (41) and at an acute angle relative to the longitudinal extension thereof, a respective web (43), which lies in the course of the rectangular through-hole (44) (sic) and pertains to the further wafer (36), is isolated from the semiconductor measuring diaphragms (2),
- as a result of the bonding of the additional wafer (46), an electrical connection is established from the respective planar electrode (7) by way of the printed conductor (28) and the web (43) to the outer terminal (29) of the planar electrode (7), and
- by means of separating cuts (47) through the rectangular through-holes (41) in the longitudinal extension thereof and perpendicular thereto the pressure-difference sensors (1) are formed.

## Revendications

1. Procédé de fabrication de capteurs de différence de pression, comportant chacun une membrane (2) de mesure en semiconducteur qui est tendue entre deux pièces (3, 4) de support en formant deux chambres (10, 11) intérieures, les pièces de support portant chacune intérieurement une électrode (7, 9) superficielle et l'une des chambres intérieures pouvant être mise sous une pression par l'intermédiaire d'une ouverture (12) de passage ménagée dans l'une des pièce de support et l'autre chambre intérieure pouvant être mise sous une autre pression de la différence de pression à mesurer et la membrane de mesure en semiconducteur et les électrodes superficielle étant reliées par des bornes (29, 31, 32) extérieures, dans lequel
- pour produire des capteurs de différence de pression comportant les bornes (29, 31, 32) extérieures montées d'un seul côté, on relie une galette (35) comportant plusieurs pièces (4) de support munies chacune d'une électrode (9) superficielle et comportant une borne (32) extérieure à une autre galette (36) comportant plusieurs membranes (2) de mesure en semiconducteur et dans lequel
- on relie à l'autre galette (36) une galette (46) supplémentaire comportant plusieurs pièces (3) de support munies chacune d'une électrode (7) superficielle et comportant une piste (28) conductrice,
caractérisé en ce que
- pour fabriquer des capteurs de différence de pression ayant des bornes (29, 31, 32) extérieures sur une surface libre d'une pièce (4) de support, on munit l'une (35) des galettes sur ses pièces (4) de support aussi d'autres bornes (29, 30) extérieures destinées respectivement à la membrane (2) de mesure en semiconducteur et à l'autre électrode (7) superficielle,
- on munit l'autre galette (36) d'un côté de la membrane (2) de mesure en semiconducteur d'un trou (41) de passage rectangulaire,
- par les découpes (44) partielles pratiquées dans l'autre galette (36) et s'étendant depuis le trou (41) de passage et en faisant un angle aigu avec son étendue longitudinale, on isole des membranes (2) de mesure en semiconducteur une barrette (43) de l'autre galette (36) se trouvant à la suite du trou (44) de passage rectangulaire,
- en reliant la galette (46) supplémentaire, on produit une liaison électrique de l'électrode (7) superficielle avec la borne (29) extérieure de l'électrode (7) superficielle, en passant par la piste (28) conductrice et la barrette (43),
- on forme les capteurs (1) de différence de pression au moyen de découpes (47) de séparation pratiquées dans les trous (41) de passage rectangulaires dans leur étendue longitudinale et perpendiculairement à cette étendue.
